(19) **Europäisches Patentamt European Patent Office Office européen des brevets**

(11) **EP 4 168 772 B1**

(12) **EUROPÄISCHE PATENTSCHRIFT**

(45) Veröffentlichungstag und Bekanntmachung des Hinweises auf die Patenterteilung:
**15.05.2024 Patentblatt 2024/20**

(21) Anmeldenummer: **21734099.1**

(22) Anmeldetag: **16.06.2021**

(51) Internationale Patentklassifikation (IPC):
*G01N 15/14* (2024.01)    *C12Q 1/686* (2018.01)
*G01N 15/10* (2024.01)    *G16B 25/20* (2019.01)
*C12Q 1/6851* (2018.01)   *G16B 40/00* (2019.01)
*G01N 21/27* (2006.01)    *G01N 21/64* (2006.01)
*G01N 15/00* (2024.01)

(52) Gemeinsame Patentklassifikation (CPC):
**G01N 21/64; G01N 15/1012; G01N 15/1429; G01N 15/1459; G01N 15/1484; G01N 21/274;** G01N 15/01; G01N 21/645; G01N 2015/1006; G01N 2015/1026; G01N 2021/6441; G01N 2201/121

(86) Internationale Anmeldenummer:
**PCT/EP2021/066231**

(87) Internationale Veröffentlichungsnummer:
**WO 2021/255088 (23.12.2021 Gazette 2021/51)**

(54) **VERFAHREN UND STEUERGERÄT ZUM AUSWERTEN EINES LUMINESZENZSIGNALS IN EINEM ANALYSEGERÄT ZUM ANALYSIEREN EINER PROBE BIOLOGISCHEN MATERIALS UND ANALYSEGERÄT ZUM ANALYSIEREN EINER PROBE BIOLOGISCHEN MATERIALS**

METHOD AND CONTROL SYSTEM FOR EVALUATING LUMINESCENCE SIGNALS IN AN ANALYSIS SYSTEM FOR ANALYSING A BIOLOGICAL SAMPLE AND ANALYSING APPARATUS FOR ANALYSING A BIOLOGICAL SAMPLE

MÉTHODE ET SYSTÈME DE COMMANDE POUR L'EVALUATION D'UN SIGNAL DE LUMINESCENCE DANS UN SYSTÈME D'ANALYSE D'ÉCHANTILLONS BIOLOGIQUES ET SYSTÈME D'ANALYSE D'ÉCHANTILLONS BIOLOGIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2020 DE 102020207587**

(43) Veröffentlichungstag der Anmeldung:
**26.04.2023 Patentblatt 2023/17**

(73) Patentinhaber: **Robert Bosch GmbH 70442 Stuttgart (DE)**

(72) Erfinder:
• **SEGUINE, Timothy Joseph 73655 Pluederhausen (DE)**
• **NOLL, Stefan 71034 Boeblingen (DE)**
• **DOERR, Aaron 74321 Bietigheim-Bissingen (DE)**

(56) Entgegenhaltungen:
**EP-A1- 3 454 043      EP-A2- 1 770 172 US-A1- 2008 018 898**

**Beschreibung**

Stand der Technik

Die Erfindung geht von einem Steuergerät oder einem Verfahren nach Gattung der unabhängigen Ansprüche aus.

Mikrofluidische Vorrichtungen, beispielsweise Chiplabor-Kartuschen, können ein fluidisches Netzwerk aufweisen, mit dem Reagenzien prozessiert werden können. Bekannt sind ein Nachweis von Krankheitserregern über PCR-basierte (PCR = Polymerase Chain Reaction; Polymerase-Kettenreaktion) Nachweismethoden und ein Auslesen über Fluoreszenz-Arrays. Hierbei kann ein Nachweis über einen Schwellwert erfolgen, d. h. sobald eine Fluoreszenz einen Schwellwert überschreitet, kann der Krankheitskeim als detektiert betrachtet werden.

Die EP 3 454 043 A1 offenbart eine Informationsverarbeitungsvorrichtung, die eine statistische Verarbeitungseinheit und eine Referenzspektrum-Berechnungseinheit umfasst. Die statistische Verarbeitungseinheit ist so konfiguriert, dass sie eine statistische Verarbeitung für eine Gruppe von Spektren durchführt, die durch das Auftreffen von Licht auf eine Gruppe von Mikropartikeln erhalten werden, die eine Reaktionseigenschaft in Bezug auf Licht aufweisen, und auf der Grundlage eines Ergebnisses der statistischen Verarbeitung ein Spektrum, das einen Ausreißer anzeigt, aus der Gruppe von Spektren ausschließt. Die Referenzspektrum-Berechnungseinheit ist so konfiguriert, dass sie ein Referenzspektrum unter Verwendung der Gruppe von Spektren berechnet, aus der das Spektrum, das den Ausreißer anzeigt, ausgeschlossen wurde.

Die US 2008/0018898 A1 betrifft die Verarbeitung von Datensignalen und insbesondere Verfahren und Systeme zur Minimierung des spektralen Übersprechens, wobei eine Bereitstellung einer Vielzahl von Filtern vorgesehen sein kann, wobei jeder Filter so konfiguriert ist, dass er einen anderen Satz von Spektralwellenlängen erfasst. Es können auch die Bestimmung eines Restfehlers für jeden Filter während der Farbstoffverstärkung und die Modifizierung der spektralen Entfaltungsmatrix auf der Grundlage des Restfehlers vorgesehen sein. Ferner kann die Filterung nachfolgender Signale erfolgen, die dem mindestens einen modifizierten Filter zugeordnet sind.

Die EP 1 770 172 A2 zeigt Systeme und Verfahren zur Verarbeitung von Daten, die Sigmoid-Kurven oder Wachstumskurven darstellen, und insbesondere Systeme und Verfahren zur Bestimmung charakteristischer Zyklusschwellen- (Ct) oder Ellenbogenwerte in Echtzeit-PCR-Amplifikationskurven.

Offenbarung der Erfindung

Vor diesem Hintergrund werden mit dem hier vorgestellten Ansatz ein Verfahren zum Auswerten eines Lumineszenzsignals in einem Analysegerät zum Analysieren einer Probe biologischen Materials, ein entsprechendes Steuergerät und ein Analysegerät zum Analysieren einer Probe biologischen Materials gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann insbesondere an einem Lumineszenzsignal eines Analysegerätes, auf dem beispielsweise eine PCR-Anwendung ausgeführt wird, im Rahmen eines Optimierungsprozesses eine Korrektur von Intensitätswerten durchgeführt werden, die durch das Lumineszenzsignal repräsentiert sind. Vorteilhafterweise kann hierbei insbesondere eine Kompensation von fluidischen Störungen in einer PCR-Anwendung bereitgestellt werden. Insbesondere im Rahmen einer sogenannten Shuttle-PCR, bei der eine probenhaltige Flüssigkeit innerhalb von beispielsweise drei fluidischen Kammern hin und her gepumpt wird, kann nach jedem Pumpvorgang über eine Kamera oder dergleichen ein Bild erstellt und darüber ein Mittelwert gebildet werden, um ein Lumineszenzsignal bereitzustellen. Durch den Pumpvorgang ist es möglich, dass Luftblasen oder sonstige Störungen zu Signalverzerrungen führen können. Es kann gemäß Ausführungsformen insbesondere der vorstehend genannte Mangel behoben werden und es kann somit eine Qualität eines Signals verbessert werden, auf deren Basis eine Analyse einer Probe erfolgen kann. Dabei können insbesondere aus einer Korrelation von verschiedenen Farbkanälen fluidische Störungen herausgerechnet bzw. kompensiert werden, wodurch eine Nachweisfunktion des Analysegeräts verbessert werden kann.

Es wird ein Verfahren zum Auswerten eines Lumineszenzsignals in einem Analysegerät zum Analysieren einer Probe biologischen Materials vorgestellt, wobei das Verfahren folgende Schritte aufweist:

Einlesen des Lumineszenzsignals von einer Schnittstelle zu mindestens einer optischen Ausleseeinheit des Analysegeräts, wobei das Lumineszenzsignal Intensitätswerte einer Lumineszenz der in einer mikrofluidischen Vorrichtung angeordneten Probe mit zumindest einer gesuchten Wellenlänge repräsentiert, wobei die mikrofluidische Vorrichtung zum Bearbeiten der Probe in mehreren Bearbeitungszyklen mit dem Analysegerät gekoppelt ist;
Verarbeiten des Lumineszenzsignals unter Verwendung eines Optimierungsprozesses, um Analysedaten bereitzustellen, die hinsichtlich einer Signalverzerrung des Lumineszenzsignals optimiert sind, wobei der Optimierungsprozess eine Intensitätskorrektur der durch das Lumineszenzsignal repräsentierten Intensitätswerte für alle Bearbeitungszyklen und gesuchten Wellenlängen der Lumineszenz unter Verwendung je eines für alle gesuchten Wellenlängen und alle Intensitätswerte gültigen Korrekturfaktors pro Bearbeitungszyklus umfasst, um korrigierte Intensitätswerte zu erzeugen, wobei jeder Korrekturfaktor eine von dem Bearbeiten der Probe abhängige, zu korrigierende Signalverzerrung des Lumineszenzsignals für den jeweiligen Intensitätswert berücksichtigt oder repräsentiert; und Klassieren des Lumineszenzsignals in eine von einer Mehrzahl von Klassen unter Verwendung der Analysedaten, wobei jede Klasse ein Analyseergebnis der Probe repräsentiert.

Das Analysegerät ist eine Analyseeinheit für eine mikrofluidische Vorrichtung. Bei einer solchen mikrofluidischen Vorrichtung kann es sich beispielsweise um eine Vorrichtung für ein Chiplabor, auch Lab-ona-Chip-System genannt, handeln. Unter einem Chiplabor kann ein mikrofluidisches System verstanden werden, in dem die gesamte Funktionalität eines makroskopischen Labors auf einem beispielsweise kreditkartengroßen Kunststoffsubstrat, der Chiplaborkartusche, untergebracht werden kann und in dem komplexe biologische, diagnostische, chemische oder physikalische Prozesse miniaturisiert ablaufen können. Die mikrofluidische Vorrichtung kann eine mikrofluidische Kartusche sein. Die mikrofluidische Vorrichtung kann mit dem Analysegerät koppelbar oder gekoppelt sein. Die Probe biologischen Materials kann in der mikrofluidische Vorrichtung angeordnet sein. Das biologische Material kann Bakterien, Viren, sonstige pathogene Zellen, menschliche Zellen, tierische Zellen, pflanzliche Zellen oder dergleichen aufweisen. Bei der Probe kann es sich um eine Probenflüssigkeit oder flüssige Probe handeln, beispielsweise Speichel, Blut, Sperma, Abstrich. Das Analysegerät kann Zusammenwirkung mit der mikrofluidische Vorrichtung ausgebildet sein, um eine Polymerase-Kettenreaktion (PCR; Polymerase Chain Reaction) durchzuführen, insbesondere eine quantitative Echtzeit-PCR. Bei der Lumineszenz kann es sich beispielsweise um Fluoreszenz oder um eine andere Form von Lumineszenz handeln. Das Lumineszenzsignal kann einen Intensitätswert pro Bearbeitungszyklus und gesuchter Wellenlänge aufweisen. Eine Analyse einer Probe kann eine Vielzahl von Bearbeitungszyklen aufweisen.

Ein Bearbeitungszyklus kann einen Bearbeitungsschritt an der Probe, eine Wartezeitdauer und/oder einen Messvorgang repräsentieren. Ein Bearbeitungszyklus kann zeitlich definiert sein. Unter Bearbeiten der Probe kann auch ein reines Messen und/oder ein Arbeiten mit der Probe verstanden werden. Der Optimierungsprozess kann eine Zielwertsuche mit Verlustfunktion repräsentieren. Die Analysedaten können mindestens die Korrekturfaktoren und zusätzlich oder alternativ die korrigierten Intensitätswerte umfassen. Die Analysedaten können auch ein entsprechend dem Optimierungsprozess korrigiertes Lumineszenzsignal umfassen. Ein Analyseergebnis kann beispielsweise eine qualitative und/oder quantitative Aussage dahingehend sein, ob der Probe ein gesuchtes Zielmolekül oder ein gesuchtes biologisches Material vorhanden ist. Ein Analyseergebnis kann ein Teilanalyseergebnis oder eine Zwischenstufe für ein endgültiges Ergebnis der Analyse repräsentieren.

Gemäß einer Ausführungsform kann bei dem im Schritt des Verarbeitens verwendeten Optimierungsprozess für jede gesuchte Wellenlänge ein über vorangegangene Bearbeitungszyklen gebildeter Mittelwert der Intensitätswerte von den korrigierten Intensitätswerten abgezogen werden, um bereinigte Intensitätswerte zu erzeugen. Hierbei können die Analysedaten auch die bereinigten Intensitätswerte umfassen. Eine solche Ausführungsform bietet den Vorteil, dass eine sogenannte Offset-Korrektur durchgeführt werden kann, um Hintergrundlumineszenz zu erkennen und zu unterdrücken.

Der im Schritt des Verarbeitens verwendete Optimierungsprozess umfasst parallel zu der Intensitätskorrektur durchgeführte Bestimmung je einer Sigmoidfunktion mit erwarteten Intensitätswerten pro gesuchter Wellenlänge. Insbesondere können hierbei drei Parameter jeder Sigmoidfunktion mittels einer Kurvenanpassung angepasst werden. Die Analysedaten haben typischerweise die Form einer Kurve, welche sich durch eine sigmoidale Kurvengleichung abbilden lässt. Eine solche Ausführungsform bietet den Vorteil, dass für jede gesuchte Wellenlänge eine ideale Kurve gefunden werden kann, die ideal bzw. möglichst genau an das Lumineszenzsignal angepasst ist. Insbesondere ist durch die parallele Ausführung der Intensitätskorrektur und der Sigmoidfunktionsbestimmung eine zuverlässige Unterdrückung von Signalverzerrungen möglich.

Dabei kann jede Sigmoidfunktion unter Verwendung einer Abbildungsmatrix auf einen der zu der Sigmoidfunktion gehörigen, gesuchten Wellenlänge zugeordneten Bildkanal abgebildet werden. Die Abbildungsmatrix kann eine Einheitsmatrix und zusätzlich oder alternativ eine Farbkompensationsmatrix aufweist. Eine solche Ausführungsform bietet den Vorteil, dass ein Übersprechen in den einzelnen Farbkanälen mit bei der Kurvenanpassung berücksichtigt werden kann.

Ferner kann bei dem im Schritt des Verarbeitens verwendeten Optimierungsprozess eine Abweichung zwischen den korrigierten Intensitätswerten und zusätzlich oder alternativ den bereinigten Intensitätswerten und den durch das Lumineszenzsignal repräsentierten Intensitätswerten für alle gesuchten Wellenlängen und für alle Bearbeitungszyklen ermittelt werden. Hierbei können die Analysedaten abhängig von der ermittelten Abweichung bereitgestellt werden. Dabei kann die Abweichung unter Verwendung einer Verlustfunktion ermittelt werden. Insbesondere kann auch jede Sigmoidfunktion beim Ermitteln der Abweichung berücksichtigt oder verwendet werden. Eine solche Ausführungsform bietet den Vorteil, dass eine Fehlerminimierung auf einfache, genaue und zuverlässige Weise vorgenommen werden kann.

Zudem wird der im Schritt des Verarbeitens verwendete Optimierungsprozess iterativ ausgeführt. Hierbei wird jeder Korrekturfaktor bei jeder Iteration unter Verwendung eines Optimierungsalgorithmus optimiert. Zusätzlich können die Parameter jeder Sigmoidfunktion auch bei jeder Iteration unter Verwendung des Optimierungsalgorithmus optimiert werden.

Insbesondere kann hierbei der Optimierungsalgorithmus eine Schätzung nach der Methode kleinster Quadrate umfassen. Eine solche Ausführungsform bietet den Vorteil, dass die Verarbeitung des Lumineszenzsignals störende Effekte in dem Signal sicher reduzieren oder unterdrücken kann, um eine Zuverlässigkeit der Analyse der Probe zu erhöhen.

Dabei können im Schritt des Verarbeitens die Analysedaten bereitgestellt werden, wenn eine Differenz zwischen entsprechenden Korrekturfaktoren aus unterschiedlichen Iterationen einen Grenzwert unterschreitet und zusätzlich oder alternativ wenn ein Änderungsbetrag der Differenz einen Schwellenwert unterschreitet. Eine solche Ausführungsform bietet den Vorteil, dass anhand solcher Konvergenzkriterien der Optimierungsprozess so gründlich wie nötig und so zeitsparend wie möglich ausgeführt werden kann.

Insbesondere kann bzw. können die vorstehend genannte ermittelte Abweichung und zusätzlich oder alternativ die vorstehend genannte Differenz mit einem Verstärkungsfaktor gewichtet werden. Der Verstärkungsfaktor kann beispielsweise 200, idealerweise 100 bis 500 und gegebenenfalls 100 bis 1000 betragen. Eine solche Ausführungsform bietet den Vorteil, dass die Fehlerminimierung weiter verbessert werden kann.

Gemäß einer Ausführungsform können die im Schritt des Verarbeitens verwendeten Korrekturfaktoren vordefinierte Idealwerte sein. Zusätzlich oder alternativ können die im Schritt des Verarbeitens verwendeten Korrekturfaktoren unter Verwendung des Lumineszenzsignals mittels einer Schätzvorschrift geschätzt werden. Hierbei kann die Schätzvorschrift eine Ermittlung eines Anteils jedes Intensitätswertes für jeden Bearbeitungszyklus relativ zu einem Mittelwert für jede gesuchte Wellenlänge, eine Potenzierung des Anteils mit einem Gewichtungsfaktor und eine Erstellung eines arithmetischen Mittels über alle gesuchten Wellenlängen umfassen. Eine solche Ausführungsform bietet den Vorteil, dass je nach Anwendungsfall der Optimierungsprozess mit geeigneten Korrekturfaktoren gestartet werden kann.

Im Schritt des Klassierens können unter Verwendung der Analysedaten eine Gesamtamplitude und ein ct-Wert des Lumineszenzsignals bestimmt werden. Hierbei repräsentiert der ct-Wert eine Anzahl von Bearbeitungszyklen bis zum Überschreiten eines Intensitätsschwellenwertes durch zumindest einen Intensitätswert, wobei der Intensitätsschwellenwert einem Vielfachen einer aus einem Signal-Rausch-Verhältnis ermittelten Standardabweichung des Lumineszenzsignals entspricht. Die Gesamtamplitude kann beim letzten Bearbeitungszyklus vorliegen. Die Gesamtamplitude kann mittels der Parameter jeder Sigmoidfunktion bestimmt werden. Der ct-Wert kann auch durch eine andere mathematische Beziehung ermittelt werden. Eine solche Ausführungsform bietet den Vorteil, dass eine exakte Klassierung auf einer sicheren Datengrundlage ermöglicht werden kann.

Dabei kann unter Verwendung der Gesamtamplitude und des ct-Wertes ein Entscheidungsprozess dahingehend durchgeführt werden, in welche Klasse das Lumineszenzsignal klassiert wird. Hierbei kann der Entscheidungsprozess einen Entscheidungsbaum oder eine Entscheidungsmatrix umfassen. Eine solche Ausführungsform bietet den Vorteil, dass eine zuverlässige Klassierung und damit ein zuverlässiges Analyseergebnis erzielt werden kann.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird auch ein Analysegerät zum Analysieren einer Probe biologischen Materials vorgestellt, wobei das Analysegerät folgende Merkmale aufweist:

einen Kopplungsabschnitt zum Koppeln des Analysegeräts mit einer mikrofluidischen Vorrichtung zum Bearbeiten der Probe;

eine Ausführungsform des vorstehend genannten Steuergerätes; und

mindestens eine optische Ausleseeinheit zum Bereitstellen des Lumineszenzsignals, wobei das Steuergerät und die mindestens eine optische Ausleseeinheit signalübertragungsfähig miteinander verbunden sind.

In Verbindung mit dem Analysegerät kann eine Ausführungsform des vorstehend genannten Steuergeräts des vorteilhaft eingesetzt oder verwendet werden, um das Lumineszenzsignal auszuwerten. Die mindestens eine optische Ausleseeinheit kann ausgebildet sein, um Intensitätswerten einer Lumineszenz der Probe zu erfassen.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:

Fig. 1 eine schematische Darstellung eines Ausführungsbeispiels eines Analysegeräts zum Analysieren einer Probe biologischen Materials;

Fig. 2 ein Ablaufdiagramm eines Ausführungsbeispiels eines Verfahrens zum Auswerten eines Lumineszenzsignals in einem Analysegerät zum Analysieren einer Probe biologischen Materials;

Fig. 3 ein Ablaufdiagramm eines Optimierungsprozesses gemäß einem Ausführungsbeispiel;

Fig. 4 ein Ablaufdiagramm einer Klassierung gemäß einem Ausführungsbeispiel; und

Fig. 5 ein Ablaufdiagramm eines Entscheidungsbaums gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

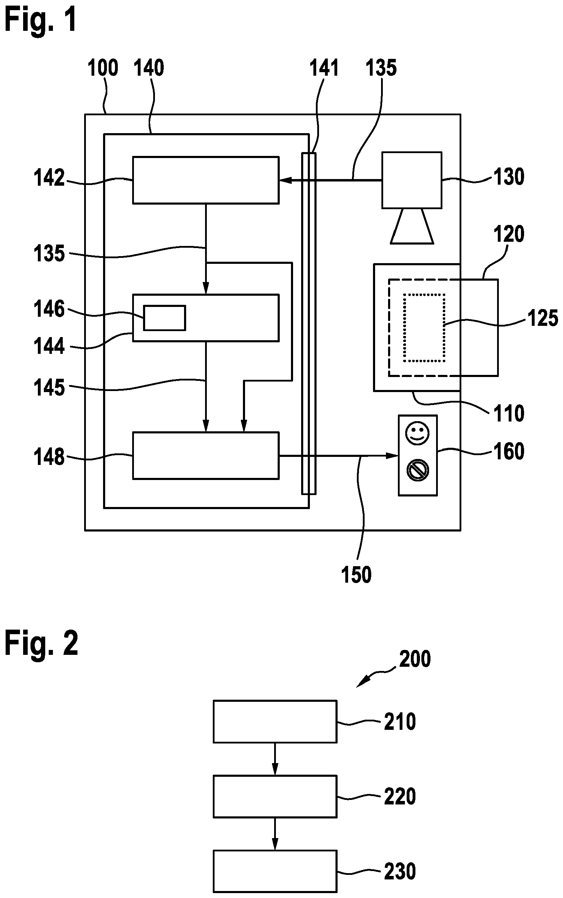

Fig. 1 zeigt eine schematische Darstellung eines Ausführungsbeispiels eines Analysegeräts 100 zum Analysieren einer Probe 125 biologischen Materials. Die Probe 125 umfasst als das biologische Material beispielsweise menschliche, pflanzliche oder tierische Zellen, Bakterien, Viren oder anderes pathogenes Material. Das Analysegerät 100 umfasst einen Kopplungsabschnitt 110 zum Koppeln des Analysegeräts 100 mit einer mikrofluidischen Vorrichtung 120 zum Bearbeiten der Probe 125. Die Probe 125 ist hierbei in der mikrofluidischen Vorrichtung 120 angeordnet. Zumindest ein Teilabschnitt der mikrofluidischen Vorrichtung 120 ist gemäß dem hier dargestellten Ausführungsbeispiel dabei in dem Analysegerät 100 aufgenommen.

Bei der mikrofluidischen Vorrichtung 120 handelt es sich um eine sogenannte Chiplabor-Kartusche bzw. LoC-Kartusche (LoC = Lab on Chip; Chiplabor) oder dergleichen. Die mikrofluidische Vorrichtung 120 ist ausgebildet, um die Probe 125 zu bearbeiten. Somit ist das Analysegerät 100 ausgebildet, um eine Bearbeitung der Probe 125 mittels der mikrofluidischen Vorrichtung 120 durchzuführen und/oder zu steuern. Die Bearbeitung der Probe 125 erfolgt beispielsweise mittels einer Polymerase-Kettenreaktion (PCR = Polymerase Chain Reaction), insbesondere einer sogenannten Shuttle-PCR. Hierbei werden an der Probe 125 eine Mehrzahl von Bearbeitungszyklen der Bearbeitung durchgeführt. Anders ausgedrückt ist die mikrofluidische Vorrichtung 120 zum Bearbeiten der Probe 125 in mehreren Bearbeitungszyklen mit dem Analysegerät 100 gekoppelt.

Das Analysegerät 100 umfasst ferner mindestens eine optische Ausleseeinheit 130 zum Bereitstellen eines Lumineszenzsignals 135. Das Lumineszenzsignal 135 repräsentiert Intensitätswerte einer Lumineszenz der Probe 125, insbesondere ansprechend auf eine Anregung und/oder Aktivierung. Zudem umfasst das Analysegerät 100 ein Steuergerät 140, das signalübertragungsfähig mit der mindestens einen optischen Ausleseeinheit 130 verbunden ist. Das Steuergerät 140 ist ausgebildet, um das Lumineszenzsignal 135 auszuwerten. Somit handelt es sich bei dem Steuergerät 140 um ein Steuergerät zum Auswerten eines Lumineszenzsignals 135 in einem Analysegerät 100 zum Analysieren einer Probe 125 biologischen Materials. Das Steuergerät 140 ist ausgebildet, um ein entsprechendes Verfahren zum Auswerten auszuführen, welches dem nachfolgend unter Bezugnahme auf Fig. 2 dargestellten Verfahren entspricht oder ähnelt. Das Steuergerät 140 umfasst dazu eine Einleseeinrichtung 142, eine Verarbeitungseinrichtung 144 und eine Klassierungseinrichtung 148.

Die Einleseeinrichtung 142 des Steuergeräts 140 ist ausgebildet, um das Lumineszenzsignal 135 von einer Schnittstelle 141 zu der mindestens einen optischen Ausleseeinheit 130 des Analysegeräts 100 einzulesen. Gemäß dem hier dargestellten Ausführungsbeispiel umfasst das Steuergerät 140 auch die Schnittstelle 141. Die Einleseeinrichtung 142 ist ferner ausgebildet, um das Lumineszenzsignal 135 an die Verarbeitungseinrichtung 144 und an die Klassierungseinrichtung 148 weiterzugeben.

Die Verarbeitungseinrichtung 144 ist ausgebildet, um das Lumineszenzsignal 135 unter Verwendung eines Optimierungsprozesses 146 zu verarbeiten, um Analysedaten 145 bereitzustellen, die in sichtlich einer Signalverzerrung des Lumineszenzsignals 135 optimiert sind. Eine Signalverzerrung kann sich bei dem Lumineszenzsignal 135 beispielsweise im Rahmen der Shuttle-PCR aufgrund einer durch Pumpvorgänge bedingte Blasenbildung in der Probe 125 ergeben. Der Optimierungsprozess 146 umfasst eine Intensitätskorrektur der durch das Lumineszenzsignal 135 repräsentierten Intensitätswerte für alle Bearbeitungszyklen und gesuchten Wellenlängen der Lumineszenz unter Verwendung je eines für alle gesuchten Wellenlängen und alle Intensitätswerte gültigen Korrekturfaktors pro Bearbeitungszyklus, um korrigierte Intensitätswerte zu erzeugen. Dabei berücksichtigt jeder Korrekturfaktor eine von dem Bearbeiten der Probe 125 abhängige, zu korrigierende Signalverzerrung des Lumineszenzsignals 135 für den jeweiligen Intensitätswert. Die Analysedaten 145 umfassen mindestens die korrigierten Intensitätswerte oder daraus hergeleitete Daten, die Korrekturfaktoren und/oder das Lumineszenzsignal 135 bzw. eine optimierte oder korrigierte Version desselben. Die Verarbeitungseinrichtung 144 ist ausgebildet, um die Analysedaten 145 an die Klassierungseinrichtung 148 weiterzugeben.

Die Klassierungseinrichtung 148 ist ausgebildet, um unter Verwendung der Analysedaten 145 das Lumineszenzsignal 135 in eine von einer Mehrzahl von Klassen zu klassieren. Jede Klasse repräsentiert ein Analyseergebnis hinsichtlich der Probe 125. Ein Analyseergebnis lautet beispielsweise auf einen positiven oder negativen Nachweis eines gesuchten Moleküls, einer gesuchten Zelle oder dergleichen in der Probe 125. Die Klassierungseinrichtung 148 und/oder das Steuergerät 140 ist ausgebildet, um ein Ergebnissignal 150 bereitzustellen, welches ein Ergebnis des Klassierens bzw. das Analyseergebnis repräsentiert. Das Steuergerät 140 ist ausgebildet, um das Ergebnissignal 150 zur Ausgabe an die Schnittstelle 141 zu einer Signalisierungseinrichtung 160 des Analysegeräts 100 bereitzustellen. Die Signalisierungseinrichtung 160 ist ausgebildet, um unter Verwendung des Ergebnissignals 150 das Analyseergebnis einem Nutzer des Analysegeräts 100 zu signalisieren. Beispielsweise ist die Signalisierungseinrichtung 160 ausgebildet, um das Analyseergebnis optisch bzw. grafisch und/oder akustisch zu signalisieren.

Nachfolgend werden Details und/oder Ausführungsbeispiele des durch die Verarbeitungseinrichtung 144 verwendeten bzw. ausgeführten Optimierungsprozesses 146 dargelegt.

Bei dem Optimierungsprozess 146 wird beispielsweise zusätzlich für jede gesuchte Wellenlänge ein über vorangegangene Bearbeitungszyklen gebildeter Mittelwert der Intensitätswerte von den korrigierten Intensitätswerten abgezogen, um bereinigte Intensitätswerte zu erzeugen. Die Analysedaten 145 umfassen hierbei die bereinigten Intensitätswerte. Zusätzlich oder alternativ umfasst der Optimierungsprozess 146 eine parallel zu der Intensitätskorrektur durchgeführte Bestimmung je einer Sigmoidfunktion mit erwarteten Intensitätswerten pro gesuchter Wellenlänge. Insbesondere werden dabei vier Parameter jeder Sigmoidfunktion mittels einer Kurvenanpassung bzw. einem sogenannten Fit angepasst. Optional zusätzlich wird hierbei jede Sigmoidfunktion unter Verwendung einer Abbildungsmatrix auf einen der zu der Sigmoidfunktion gehörigen, gesuchten Wellenlänge zugeordneten Bildkanal abgebildet. Die Abbildungsmatrix umfasst eine Einheitsmatrix und/oder eine Farbkompensationsmatrix.

Ein Kurvenverlauf bzw. Signalverlauf des Lumineszenzsignals 135 für alle gesuchten Wellenlängen bzw. für die jeweiligen Targets ist stets mit einem sigmoidalen Kurvenfit abbildbar. Hierbei ist es unerheblich, ob die Parameter einen kompletten sigmoidalen Verlauf, einen exponentiellen Anstieg oder eine Nulllinie abbilden. Diese drei Fälle können mit der Sigmoidfunktion bzw. sigmoidalen Funktion abgebildet werden, die nachfolgend beispielhaft angegeben ist:

$$f(x) = a + \frac{k - a}{1 + e^{bx(x0-x)}}$$

Für einen sigmoidalen Verlauf können die Parameter beispielsweise wie folgt lauten: a = 1; k = 40; x0 = 30; b = 0,4. Für einen exponentiellen Anstieg können die Parameter beispielsweise wie folgt lauten: a = 1; k = 200; x0 = 47; b = 0,4. Für eine Nulllinie können die Parameter beispielsweise wie folgt lauten: a = 1; k = 1; x0 = 1000; b = 0,4.

Gemäß einem Ausführungsbeispiel erfolgt bei dem Optimierungsprozess 146 eine Ermittlung einer Abweichung zwischen den korrigierten Intensitätswerten und/oder den bereinigten Intensitätswerten und den durch das Lumineszenzsignal 135 repräsentierten Intensitätswerten für alle gesuchten Wellenlängen und für alle Bearbeitungszyklen. Die Verarbeitungseinrichtung 144 ist hierbei ausgebildet, um die Analysedaten 145 abhängig von der ermittelten Abweichung bereitzustellen. Gemäß einem Ausführungsbeispiel wird der Regierungsprozess 146 iterativ ausgeführt. Dabei wird bzw. werden bei jeder Iteration unter Verwendung eines Optimierungsalgorithmus jeder Korrekturfaktor und/oder die Parameter jeder Sigmoidfunktion optimiert. Der Optimierungsalgorithmus umfasst insbesondere eine Schätzung nach der Methode kleinster Quadrate. Gemäß einem Ausführungsbeispiel ist die Ermittlungseinrichtung 144 ausgebildet, um die Analysedaten 145 bereitzustellen, wenn eine Differenz zwischen entsprechenden Korrekturfaktoren aus unterschiedlichen Iterationen einen Grenzwert unterschreitet und/oder ein Änderungsbetrag der Differenz einen Schwellenwert unterschreitet. Optional zusätzlich wird bzw. werden bei dem Optimierungsprozess 146 die Abweichung und/oder die Differenz mit einem Verstärkungsfaktor gewichtet.

Gemäß einem Ausführungsbeispiel handelt es sich bei den Korrekturfaktoren, die bei dem Optimierungsprozess 146 bzw. durch die Verarbeitungseinrichtung 144 verwendet werden, um vordefinierte Idealwerte. Zusätzlich oder alternativ handelt es sich bei den Korrekturfaktoren um unter Verwendung des Lumineszenzsignals 135 mittels einer Schätzvorschrift geschätzte Werte. Die Schätzvorschrift umfasst eine Ermittlung eines Anteils jedes Intensitätswertes für jeden Bearbeitungszyklus relativ zu einem Mittelwert für jede gesuchte Wellenlänge, eine Potenzierung des Anteils mit einem Gewichtungsfaktor und eine Erstellung eines arithmetischen Mittels über alle gesuchten Wellenlängen.

Nachfolgend werden Details und/oder Ausführungsbeispiele hinsichtlich der Klassierungseinrichtung 148 dargelegt. So ist gemäß einem Ausführungsbeispiel die Klassierungseinrichtung 148 ausgebildet, um unter Verwendung der Analysedaten 145 eine Gesamtamplitude und einen ct-Wert des Lumineszenzsignals 135 zu bestimmen. Der ct-Wert repräsentiert eine Anzahl von Bearbeitungszyklen bis zum Überschreiten eines Intensitätsschwellenwertes durch zumindest einen Intensitätswert, wobei der Intensitätsschwellenwert einem Vielfachen einer aus einem Signal-Rausch-Verhältnis ermittelten Standardabweichung des Lumineszenzsignals 135 entspricht. Gemäß einem Ausführungsbeispiel ist die Klassierungseinrichtung 148 auch ausgebildet, um unter Verwendung der Gesamtamplitude und des ct-Wertes einen Entscheidungsprozess dahingehend durchzuführen, in welche Klasse das Lumineszenzsignal klassiert wird. Der Entscheidungsprozess umfasst dabei einen Entscheidungsbaum, eine Entscheidungsmatrix oder dergleichen.

Fig. 2 zeigt ein Ablaufdiagramm eines Ausführungsbeispiels eines Verfahrens 200 zum Auswerten eines Lumineszenzsignals in einem Analysegerät zum Analysieren einer Probe biologischen Materials. Das Verfahren 200 zum Auswerten ist hierbei in Verbindung mit dem Analysegerät aus Fig. 1 oder einem ähnlichen Analysegerät ausführbar. Auch sind die Schritte des Verfahrens 200 zum Auswerten mittels des Steuergerätes aus Fig. 1 oder eines ähnlichen Steuergerätes in entsprechenden Einheiten bzw. Einrichtungen desselben ausführbar. Das Verfahren 200 zum Auswerten umfasst einen Schritt 210 des Einlesens, einen Schritt 220 des Verarbeitens und einen Schritt 230 des Klassierens.

In dem Schritt 210 des Einlesens wird das Lumineszenzsignal von einer Schnittstelle zu mindestens einer optischen Ausleseeinheit des Analysegeräts eingelesen. Das Lumineszenzsignal repräsentiert Intensitätswerte einer Lumineszenz der in einer mikrofluidischen Vorrichtung angeordneten Probe mit zumindest einer gesuchten Wellenlänge. Die mikrofluidische Vorrichtung ist zum Bearbeiten der Probe in mehreren Bearbeitungszyklen mit dem Analysegerät gekoppelt.

Nachfolgend wird in dem Schritt 220 des Verarbeitens das Lumineszenzsignal unter Verwendung eines Optimierungsprozesses verarbeitet, um Analysedaten bereitzustellen, die hinsichtlich einer Signalverzerrung des Lumineszenzsignals optimiert sind. Der Optimierungsprozess umfasst eine Intensitätskorrektur der durch das Lumineszenzsignal repräsentierten Intensitätswerte für alle Bearbeitungszyklen und gesuchten Wellenlängen der Lumineszenz unter Verwendung je eines für alle gesuchten Wellenlängen und alle Intensitätswerte gültigen Korrekturfaktors pro Bearbeitungszyklus, um korrigierte Intensitätswerte zu erzeugen. Jeder Korrekturfaktor berücksichtigt eine von dem Bearbeiten der Probe abhängige, zu korrigierende Signalverzerrung des Lumineszenzsignals für den jeweiligen Intensitätswert.

Wiederum nachfolgend wird in dem Schritt 230 des Klassierens unter Verwendung der Analysedaten das Lumineszenzsignal in eine Mehrzahl von Klassen klassiert. Jede Klasse repräsentiert ein Analyseergebnis der Probe bzw. ein Ergebnis der Analyse der Probe.

Unter Bezugnahme auf die hierin beschriebenen Figuren sei zusammenfassend und mit anderen Worten angemerkt, dass insbesondere drei beheizbare fluidische Pumpkammern mit unterschiedlicher Temperatur, die mindestens eine optische Ausleseeinheit 130 und der auf dem Analysegerät 100, genauer gesagt auf dem Steuergerät 140 installierte und ausführbare Auswertealgorithmus die Funktion einer Shuttle-PCR inklusive deren Auswertung ermöglichen. Bei dem durch das Steuergerät 140 und/oder das Verfahren 200 ausgeführten Auswertealgorithmus erfolgt ein Kurvenfit zum Ermitteln von idealisierten Parametern und erfolgt eine Klassierung oder Klassifikation anhand so kompensierter Signale.

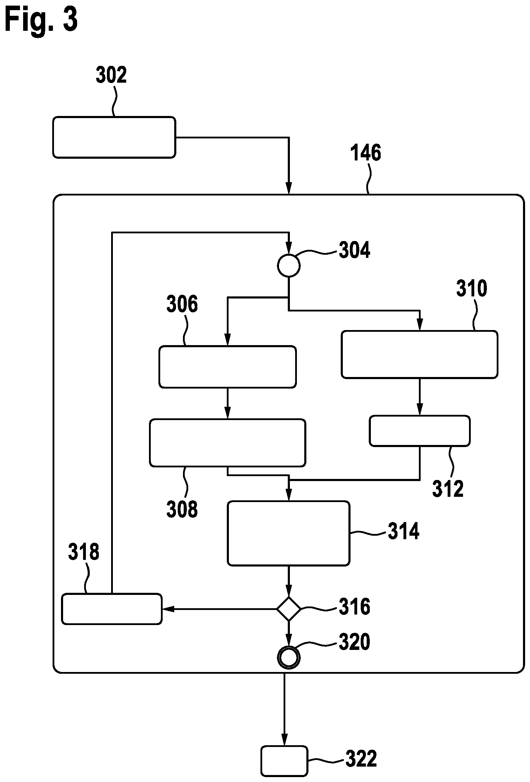

Fig. 3 zeigt ein Ablaufdiagramm eines Optimierungsprozesses 146 gemäß einem Ausführungsbeispiel. Der Optimierungsprozess 146 entspricht oder ähnelt hierbei dem Optimierungsprozess aus Fig. 1 und/oder Fig. 2.

Zunächst erfolgt in einem Block 302 eine Aufstellung von Start-Parametern bzw. eines Initialvektors für den Optimierungsprozess 146, insbesondere für die Kurvenanpassung bzw. den Fit. Die Start-Parameter sind hierbei durch einen Vektor repräsentiert. Dieser Vektor umfasst Fit-Parameter für eine sigmoidale Kurve sowie Offset-Informationen der jeweiligen Targets bzw. gesuchten Wellenlängen. Ebenso umfasst dieser Vektor für jeden aufgenommenen Zyklus bzw. Bearbeitungszyklus einen Korrekturfaktor bzw. Kompensationswert. Die Initialisierung erfolgt sowohl über sigmoidale Startparameter, hier Offset als Mittelwert der ersten n Zyklen, Range als abgedeckter Wertebereich der gemessenen Kurve bzw. des Lumineszenzsignals und restliche Parameter, die anhand von vordefinierten Werten, z. B. Wendepunkt bei 80% der Zyklenzahl, Steigung = 1, etc. bestimmt sind, als auch über den zumindest einen Korrekturfaktor bzw. Kompensationswert für die Intensitätskorrektur. Der Kompensationswert ist beispielsweise auf den Wert 1,0 für jeden Zyklus initialisiert. Alternativ wird der Kompensationswert aus den Messkurven bzw. dem Lumineszenzsignal vorab geschätzt. Hierzu wird der Anteil jedes Signalwertes des Lumineszenzsignals bei jedem Zykluswert relativ zu dem Mittelwert von jedem Target bzw. jeder gesuchten Wellenlänge berechnet und mit einem Gewichtungsfaktor potenziert. Jeweils für jeden Zyklus wird dann das arithmetische Mittel über die jeweiligen Targets erstellt und dieser Wert als Kompensations-Startwert verwendet.

Hierbei kommt folgende mathematische Beziehung zum Einsatz:

$$avg_{iTarget} = \sum_{iZyklus=1..nZyklen} \frac{Signal(iZyklus, iTarget)}{nZyklen}$$

Mittelwert des Lumineszenzsignals für jedes Target.

$$Kompensation = \frac{\sum_{iTarget=1..nTargets}\left(\frac{avg_{iTarget}}{Signal(iZyklus, iTarget)}\right)^{Gewichtung}}{nTargets}$$

Idealerweise ist der Gewichtungsfaktor 0.1. Ein Gewichtungsfaktor von 0.0 entspräche dem obigen Fall mit einem vorgegebenen Wert von 1,0 für den Kompensationswert.

Der im Block 302 bestimmte Initialvektor wird in den Optimierungsprozess 146 und damit in eine Zielwertsuche mit einer Verlustfunktion gegeben. Gemäß einem Anwendungsbeispiel umfasst der Initialvektor beispielsweise bei vier gesuchten Wellenlängen bzw. Targets je vier Parameter für vier Sigmoid-Kurven und beispielsweise bei 50 Bearbeitungszyklen und entsprechend 50 Intensitätswerten pro gesuchter Wellenlänge auch 50 Parameter für die Intensitätskorrektur, d.h. 50 Korrekturfaktoren bzw. Kompensationswerte. Somit umfasst der Initialvektor gemäß dem Anwendungsbeispiel 66 Werte.

Ausgehend von einem Verzweigungspunkt 304 in dem Optimierungsprozess 146 erfolgen in einem ersten Zweig in einem Block 306 eine Bestimmung je einer Sigmoidfunktion mit erwarteten Intensitätswerten pro gesuchter Wellenlänge bzw. eine Berechnung von Idealkurven und in einem Block 308 eine Farbkompensation. In dem Block 306 werden bezogen auf das vorstehend genannte Anwendungsbeispiel vier sigmoidale Kurven berechnet, wobei eine Eingabe vier Parameter umfasst und eine Ausgabe eine ideale Kurve bzw. Funktion pro Zyklus und pro Farbe bzw. gesuchter Wellenlänge umfasst. In dem Block 308 werden Signale in Farbkanälen berechnet wobei eine Eingabe die gemäß dem Anwendungsbeispiel vier idealen Kurven umfasst und eine Ausgabe ein ideales Messsignal auf jedem Farbkanal umfasst.

Ausgehend von dem Verzweigungspunkt 304 in dem Optimierungsprozess 146 erfolgen in einem zweiten Zweig in einem Block 310 die Intensitätskorrektur und in einem Block 312 eine Offset-Korrektur. In dem Block 310 erfolgt eine Berechnung echter Intensitätswerte, wobei eine Eingabe die Intensitätswerte des Lumineszenzsignals umfasst und eine Ausgabe die durch die Intensitätskorrektur korrigierten Intensitätswerte umfasst. Die Kompensationswerte werden hierbei auf alle Targets gleichermaßen angewandt. Für jeden Zyklus steht ein Kompensationsparameter zu Verfügung, welcher mit den jeweiligen Intensitätswerten für jedes Target multipliziert wird. In dem Block 312 erfolgt ein Abzug des Offsets, wobei eine Eingabe die korrigierten Intensitätswerte umfasst und eine Ausgabe die bereinigten Intensitätswerte umfasst, d.h. Kurven auf 0-Level. Dabei erfolgt die Offset-Korrektur targetspezifisch bzw. wellenlängenspezifisch.

Ein Block 314 repräsentiert eine Bestimmung einer Fehlerfunktion bzw. eine Berechnung der Verlustfunktion nach einer Zusammenführung der beiden parallelen Zweige. Dabei wird zum Beispiel ein quadratischer Abstand real zu der Messung ermittelt. Es wird ein durch die Intensitätskorrektur bewirkter Fehler berechnet. Eine Ausgabe des Blocks 314 ist ein Fehlervektor, der gemäß dem Anwendungsbeispiel 250 Werte umfasst, die gemäß dem Anwendungsbeispiel 50 Korrekturwerte und die gemäß dem Anwendungsbeispiel 50 bereinigten Intensitätswerte pro Target, d.h. 50 gewichtete bzw. bereinigte Korrekturwerte bzw. Korrekturfaktoren sowie jeweils 50 Werte, die Differenzen zwischen idealer und real kompensierter Kurve repräsentieren.

Wenn bei einem Entscheidungsblock 316 festgestellt wird, dass in dem Fehlervektor enthaltene Fehler kleiner als ein Grenzwert ist oder ein Änderungsbetrag des Fehlers einen Schwellenwert unterschreitet, gelangt der Optimierungsprozess bei einem Block 320 zu einem Ende und es erfolgt bei einem Block 322 eine Ausgabe der Analysedaten.

Wenn bei dem Entscheidungsblock 316 festgestellt wird, dass der Fehlervektor die vorstehend genannten Konvergenzkriterien verletzt, wird eine Iteration oder weitere Iteration des Optimierungsprozesses 146 ausgeführt. Hierbei ein Optimierungsalgorithmus, beispielsweise unter Verwendung einer Schätzung nach der Methode kleinster Quadrate, in einem Block 318 ausgeführt, um einen passenden Parametersatz für den Initialvektor zu finden.

Bei der Verlustfunktion im Rahmen des Optimierungsprozesses 146 und/oder bei dem Optimierungsprozess 146 insgesamt werden anders ausgedrückt somit folgende Berechnungen durchgeführt: Aus den sigmoidalen Parametern wird in dem Block 306 noch ohne den Offset eine Kurve generiert, die für jeden Zyklus einen erwarteten Wert berechnet. Dies wird für jedes Target durchgeführt. In dem Block 308 werden über eine Abbildungsmatrix die einzelnen Kurven für die Targets auf die Bildkanäle abgebildet. In einem idealen Fall wird hier eine Einheitsmatrix verwendet, die jeweils jedes Target auf jede Wellenlänge 1:1 abbildet. Liegt ein Übersprechen in den einzelnen Farbkanälen vor, kann dies mit einer Farbkompensationsmatrix abgebildet werden. Nachfolgend wird für jede Wellenlänge ein Offset-Wert addiert. Parallel erfolgt in dem Block 310 die Intensitätskorrektur bzw. Kompensation der Eingangsdaten bzw. Intensitätswerte, wobei jede aufgenommene Kurve mit dem die Korrekturfaktoren umfassenden Kompensationsvektor multipliziert wird, in dem jeweils jedes Element über eine Gewichtung angepasst wird. Im Idealfall ist dieser Gewichtungsfaktor 1,0, d. h. der Intensitätswerte braucht nicht verändert zu werden. Der Kompensationsvektor ist für alle Kurven für alle Wellenlängen identisch, d. h. die Intensitätskorrektur bzw. Kompensation erfolgt auf allen Wellenlängen in gleichem Maße. In dem Block 314 wird die Differenz zwischen der berechneten kompensierten Idealkurve bzw. den korrigierten und bereinigten Intensitätswerten, sowie der gemessenen Kurve bzw. den durch das Lumineszenzsignal repräsentierten Intensitätswerten für alle Wellenlängenbereiche für jeden einzelnen Zyklus gebildet. Ebenso wird die Differenz zwischen den einzelnen Werten für die Korrekturfaktoren und dem Idealwert 1,0 gebildet. Diese Fehlerwerte werden beispielsweise mit einem Gewichtungsfaktor nochmals verstärkt, der z. B. 200, idealerweise zwischen 100 und 500, ggf. auch zwischen 100 und 1000 beträgt. Alle Fehlerwerte ergeben zusammen den Fehlervektor, der bei Bedarf in den Block 318 veranschaulichten Optimierungsalgorithmus gegeben wird. Der Optimierungsalgorithmus verändert den Eingangsvektor bzw. Initialvektor, sodass die Fehlerwerte minimal werden. Als Optimierungsalgorithmus kann ein Least-Squares-Schätzer verwendet werden. Gemäß einem Ausführungsbeispiel werden die Fehler über eine Loss-Funktion bzw. Verlustfunktion gewichtet. Hierbei kann beispielsweise das sogenannte Hinge-Loss-Verfahren verwendet werden. Durch den Optimierungsprozess 146 werden folgende idealisierten Werte ermittelt: eine sigmoidale Verteilung der jeweiligen Targets, Offsets und Kompensationsvektor bzw. Intensitätskorrekturvektor.

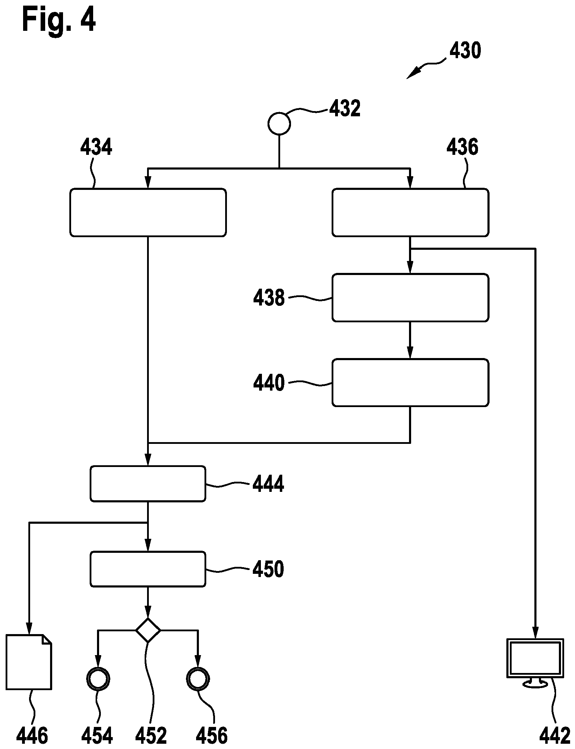

Fig. 4 zeigt ein Ablaufdiagramm einer Klassierung 430 gemäß einem Ausführungsbeispiel. Die Klassierung 430 ist mittels der Klassierungseinrichtung aus Fig. 1 oder einer ähnlichen Einrichtung und/oder im Rahmen des Schrittes zum Klassieren des Verfahrens aus Fig. 2 oder eines ähnlichen Verfahrens ausführbar.

Die Klassierung 430 oder Klassifikation beginnt bei einem Startblock 432. Bei einem Block 434 wird eine Gesamtamplitude *idealEndSignalLevel* bestimmt, wobei genauer gesagt mittels der sigmoidalen Kurvenparameter die Amplitude beim letzten Amplifizierungsschritt bzw. Bearbeitungszyklus bestimmt wird. Ferner wird eine Block 436 das Signal-zu-Rauschen-Verhältnis der kompensierten Kurve, hier insbesondere der korrigierten und bereinigten Intensitätswerte ermittelt. Dies erfolgt durch die Kompensation der Eingangskurven mit dem ermittelten Intensitätskorrekturvektor nach dem vorstehend genannten Verfahren und/oder Optimierungsprozess. Dann wird in einem Block 438 daraus die Standardabweichung bzw. Varianz berechnet. Daraus wird dann in einem Block 440 der Intensitätsschwellenwert bzw. ein sogenannter Punch-Through-Faktor $y10std_{threshold}$ ermittelt, der ein Vielfaches der Standardabweichung ist. Der Sicherheitsfaktor zur Multiplikation der Standardabweichung beträgt beispielsweise 10, gemäß einem Ausführungsbeispiel 5 bzw. in einem Bereich von 3 bis 10.

Gemäß einem Ausführungsbeispiel kann das im Block 436 ermittelte Signal-zu-Rauschen-Verhältnis bei einem Block 442 live angezeigt werden.

Nachfolgend wird in einem Block 444 unter Verwendung der Gesamtamplitude *idealEndSignalLevel* und des Intensitätsschwellenwerts bzw. Punch-Through-Faktors $y10std_{threshold}$ der ct-Wert bzw. idealisierte Threshold-Wert ct gemäß der folgenden mathematischen Beziehung ermittelt:

$$ct = \mathrm{x0} - \frac{\log\left(\frac{c}{y10std_{threshold}} - 1\right)}{\mathrm{k}}$$

Ebenso ist es möglich, den Threshold-Wert ct festzusetzen als den Zyklus mit der erstmaligen Überschreitung der idealisierten Kurve mit dem Punch-Through-Faktor.

Wiederum nachfolgend wird bei einem Block 450 eine Entscheidungsmatrix oder einen Entscheidungsbaum ausgeführt. Hierbei wird zum Beispiel überprüft, ob der ct-Wert und die Gesamtamplitude in der Spannweite bzw. dem Range liegen. Durch einen Entscheidungsbaum oder eine Entscheidungsmatrix wird aus den Eingangsparametern eine Klassierung bzw. Klassifizierung der Eingangskurve vorgenommen. Nachfolgend wird bei einem Entscheidungsblock 452 schließlich die Klassierung dahingehend abgeschlossen, ob das Analyseergebnis beispielsweise wie bei einem ersten Ergebnisblock 454 positiv oder bei einem zweiten Ergebnisblock 456 negativ lautet.

Gemäß einem Ausführungsbeispiel kann der im Block 444 ermittelte ct-Wert auch Berichtskennzahlen bei einem Block 446 zugeführt werden.

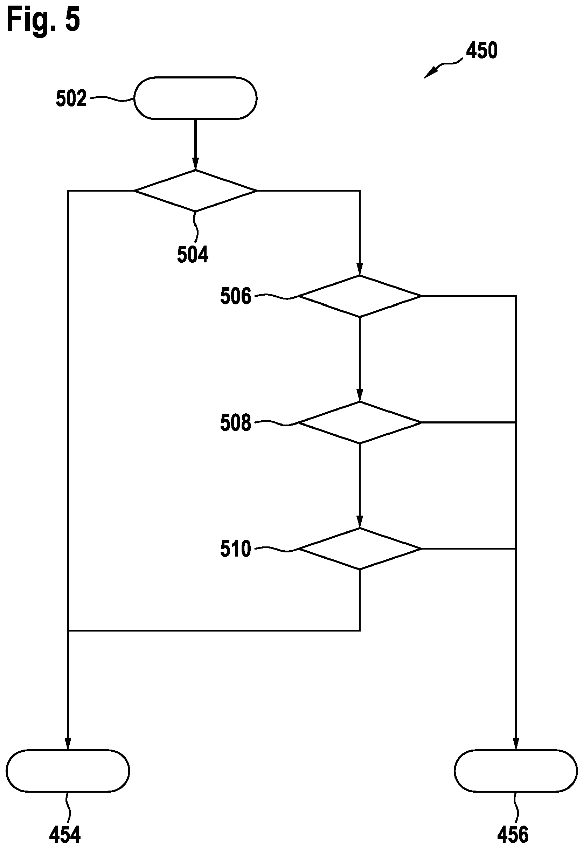

Fig. 5 zeigt ein Ablaufdiagramm eines Entscheidungsbaums 450 gemäß einem Ausführungsbeispiel. Der Entscheidungsbaum 450 entspricht oder ähnelt dem in Fig. 4 genannten Entscheidungsbaum. Ausgehend von einem Startblock 502 in dem Entscheidungsbaum 450 wird zunächst bei einem Block 504 eine Entscheidung dahingehend vorgenommen, ob die Gesamtamplitude *idealEndSignalLevel* größer als ein Schwellenwert ist, d.h. ob beispielsweise idealEndSignalLevel > (baselineDeviation * 40) gilt. Falls dem so ist, endet der Entscheidungsbaum 450 bei dem ersten Ergebnisblock 454, der ein positives Analyseergebnis repräsentiert. Falls dem nicht so ist, folgt auf den Block 504 ein Block 506, bei dem eine Entscheidung dahingehend vorgenommen wird, ob ein x0-Wert größer als 100 oder kleiner als 20 ist. Falls dem so ist, endet der Entscheidungsbaum 450 bei dem zweiten Ergebnisblock 456, der ein negatives Analyseergebnis präsentiert. Was dem jedoch so ist, folgt auf den Block 506 ein Block 508, bei dem eine Entscheidung dahingehend vorgenommen wird, ob der ct-Wert kleiner als 10 oder größer als 100 ist. Falls dem so ist, endet der Entscheidungsbaum 450 bei dem zweiten Ergebnisblock 456. Was dem nicht so ist, folgt auf den Block 508 ein Block 510, bei dem eine Entscheidung dahingehend vorgenommen wird, ob die Gesamtamplitude *idealEndSignalLevel* größer als ein anderer Schwellenwert ist, d.h. ob beispielsweise idealEndSignalLevel > (baselineDeviation * 10) gilt. Falls dem so ist, endet der Entscheidungsbaum 450 bei dem ersten Ergebnisblock 454. Was dem nicht so ist, endet der Entscheidungsbaum 450 bei dem zweiten Ergebnisblock 456.

## Patentansprüche

1. Verfahren (200) zum Auswerten eines Lumineszenzsignals (135) in einem Analysegerät (100) zum Analysieren einer Probe (125) biologischen Materials, wobei das Verfahren (200) folgende Schritte aufweist:

   Einlesen (210) des Lumineszenzsignals (135) von einer Schnittstelle (141) zu mindestens einer optischen Ausleseeinheit (130) des Analysegeräts (100), wobei das Lumineszenzsignal (135) Intensitätswerte einer Lumineszenz der in einer mikrofluidischen Vorrichtung (120) angeordneten Probe (125) mit zumindest einer gesuchten Wellenlänge repräsentiert, wobei die mikrofluidische Vorrichtung (120) zum Bearbeiten der Probe (125) in mehreren Bearbeitungszyklen mit dem Analysegerät (100) gekoppelt ist;
   Verarbeiten (220) des Lumineszenzsignals (135) unter Verwendung eines Optimierungsprozesses (146), um Analysedaten (145) bereitzustellen, die hinsichtlich einer Signalverzerrung des Lumineszenzsignals (135) optimiert sind, wobei der Optimierungsprozess (146) eine Intensitätskorrektur (310) der durch das Lumineszenzsignal (135) repräsentierten Intensitätswerte für alle Bearbeitungszyklen und gesuchten Wellenlängen der Lumineszenz unter Verwendung je eines für alle gesuchten Wellenlängen und alle Intensitätswerte gültigen Korrekturfaktors pro Bearbeitungszyklus umfasst, um korrigierte Intensitätswerte zu erzeugen, wobei jeder Korrekturfaktor eine von dem Bearbeiten der Probe (125) abhängige, zu korrigierende Signalverzerrung des Lumineszenzsignals (135) für den jeweiligen Intensitätswert berücksichtigt oder repräsentiert, wobei der Optimierungsprozess (146) eine parallel zu der Intensitätskorrektur (310) durchgeführte Bestimmung (306) je einer Sigmoidfunktion mit erwarteten Intensitätswerten pro gesuchter Wellenlänge umfasst, wobei der Optimierungsprozess (146) iterativ ausgeführt wird, wobei jeder Korrekturfaktor bei jeder Iteration unter Verwendung eines Optimierungsalgorithmus (318) optimiert werden, insbesondere wobei der Optimierungsalgorithmus (318) eine Schätzung nach der Methode kleinster Quadrate umfasst, wobei die Korrekturfaktoren vordefinierte Idealwerte sind und/oder unter Verwendung des Lumineszenzsignals (135) mittels einer Schätzvorschrift geschätzt werden, insbesondere wobei die Schätzvorschrift eine Ermittlung eines Anteils jedes Intensitätswertes für jeden Bearbeitungszyklus relativ zu einem Mittelwert für jede gesuchte Wellenlänge, eine Potenzierung des Anteils mit einem Gewichtungsfaktor und eine Erstellung eines arithmetischen Mittels über alle gesuchten Wellenlängen umfasst; und
   Klassieren (230) des Lumineszenzsignals (135) in eine von einer Mehrzahl von Klassen unter Verwendung der Analysedaten (145), wobei jede Klasse ein Analyseergebnis (454, 456) der Probe (125) repräsentiert.

2. Verfahren (200) gemäß Anspruch 1, wobei bei dem im Schritt (220) des Verarbeitens verwendeten Optimierungsprozess (146) für jede gesuchte Wellenlänge ein über vorangegangene Bearbeitungszyklen gebildeter Mittelwert der Intensitätswerte von den korrigierten Intensitätswerten abgezogen wird, um bereinigte Intensitätswerte zu erzeugen.

3. Verfahren (200) gemäß einem der vorangegangenen Ansprüche, wobei vier Parameter jeder Sigmoidfunktion mittels einer Kurvenanpassung angepasst werden.

4. Verfahren (200) gemäß einem der vorangegangenen Ansprüche, wobei jede Sigmoidfunktion unter Verwendung einer Abbildungsmatrix auf einen der zu der Sigmoidfunktion gehörigen, gesuchten Wellenlänge zugeordneten Bildkanal abgebildet wird, wobei die Abbildungsmatrix eine Einheitsmatrix und/oder eine Farbkompensationsmatrix aufweist.

5. Verfahren (200) gemäß einem der vorangegangenen Ansprüche, wobei bei dem im Schritt (220) des Verarbeitens verwendeten Optimierungsprozess (146) eine Abweichung zwischen den korrigierten Intensitätswerten und/oder den bereinigten Intensitätswerten und den durch das Lumineszenzsignal (135) repräsentierten Intensitätswerten für alle gesuchten Wellenlängen und für alle Bearbeitungszyklen ermittelt wird, wobei die Analysedaten (145) abhängig von der ermittelten Abweichung bereitgestellt werden.

6. Verfahren (200) gemäß Anspruch 3, wobei die Parameter jeder Sigmoidfunktion bei jeder Iteration unter Verwendung eines Optimierungsalgorithmus (318) optimiert werden.

7. Verfahren (200) gemäß einem der vorangegangenen Ansprüche, wobei im Schritt (220) des Verarbeitens die Analysedaten (145) bereitgestellt werden, wenn eine Differenz zwischen entsprechenden Korrekturfaktoren aus unterschiedlichen Iterationen einen Grenzwert unterschreitet und/oder ein Änderungsbetrag der Differenz einen Schwellenwert unterschreitet.

8. Verfahren (200) gemäß Anspruch 5 oder Anspruch 7, wobei die Abweichung und/oder die Differenz mit einem Verstärkungsfaktor gewichtet wird oder werden.

9. Verfahren (200) gemäß einem der vorangegangenen Ansprüche, wobei im Schritt (230) des Klassierens unter Verwendung der Analysedaten (145) eine Gesamtamplitude und ein ct-Wert des Lumineszenzsignals (135) bestimmt werden, wobei der ct-Wert eine Anzahl von Bearbeitungszyklen bis zum Überschreiten eines Intensitätsschwellenwertes durch zumindest einen Intensitätswert repräsentiert, wobei der Intensitätsschwellenwert einem Vielfachen einer aus einem Signal-Rausch-Verhältnis ermittelten Standardabweichung des Lumineszenzsignals (135) entspricht.

10. Verfahren (200) gemäß Anspruch 9, wobei unter Verwendung der Gesamtamplitude und des ct-Wertes ein Entscheidungsprozess (450) dahingehend durchgeführt wird, in welche Klasse das Lumineszenzsignal (135) klassiert wird, wobei der Entscheidungsprozess (450) einen Entscheidungsbaum oder eine Entscheidungsmatrix umfasst.

11. Steuergerät (140), das eingerichtet ist, um die Schritte des Verfahrens (200) gemäß einem der vorangegangenen Ansprüche in entsprechenden Einheiten (142, 144, 148) auszuführen und/oder anzusteuern.

12. Analysegerät (100) zum Analysieren einer Probe (125) biologischen Materials, wobei das Analysegerät (100) folgende Merkmale aufweist:

einen Kopplungsabschnitt (110) zum Koppeln des Analysegeräts (100) mit einer mikrofluidischen Vorrichtung (120) zum Bearbeiten der Probe (125);
das Steuergerät (140) gemäß Anspruch 11; und
mindestens eine optische Ausleseeinheit (130) zum Bereitstellen des Lumineszenzsignals (135), wobei das Steuergerät (140) und die mindestens eine optische Ausleseeinheit (130) signalübertragungsfähig miteinander verbunden sind.

13. Computerprogramm, das dazu eingerichtet ist, die Schritte des Verfahrens (200) gemäß einem der vorangegangenen Ansprüche auszuführen und/oder anzusteuern.

14. Maschinenlesbares Speichermedium, auf dem das Computerprogramm nach Anspruch 13 gespeichert ist.

**Claims**

1. Method (200) for evaluating a luminescence signal (135) in an analyser (100) for analysing a sample (125) of biological material, wherein the method (200) comprises the following steps:

reading (210) the luminescence signal (135) from an interface (141) to at least one optical readout unit (130) of the analyser (100), wherein the luminescence signal (135) represents intensity values for a luminescence of the sample (125) arranged in a microfluidic apparatus (120) with at least one sought wavelength, wherein the microfluidic apparatus (120) is coupled to the analyser (100) for processing the sample (125) in a plurality of processing cycles;

processing (220) the luminescence signal (135) using an optimization process (146) in order to provide analysis data (145) which are optimized with respect to a signal distortion of the luminescence signal (135), wherein the optimization process (146) comprises an intensity correction (310) of the intensity values represented by the luminescence signal (135) for all processing cycles and sought wavelengths of the luminescence using in each case one correction factor, valid for all sought wavelengths and all intensity values, per processing cycle in order to generate corrected intensity values, wherein each correction factor takes into account or represents a signal distortion of the luminescence signal (135) to be corrected, which is dependent on the processing of the sample (125), for the respective intensity value, wherein the optimization process (146) comprises a determination (306), carried out in parallel with the intensity correction (310), per one sigmoid function with expected intensity values per sought wavelength, wherein the optimization process (146) is carried out iteratively, wherein each correction factor is optimized during each iteration using an optimization algorithm (318), in particular wherein the optimization algorithm (318) comprises an estimation according to the least squares method, wherein the correction factors are predefined ideal values and/or are estimated using the luminescence signal (135) by means of an estimation rule, in particular wherein the estimation rule comprises an ascertainment of a portion of each intensity value for each processing cycle relative to an average value for each sought wavelength, a potentiation of the portion with a weighting factor, and the generation of an arithmetic mean over all sought wavelengths; and

classifying (230) the luminescence signal (135) into one of a plurality of classes using the analysis data (145), with each class representing one analysis result (454, 456) of the sample (125).

2. Method (200) according to Claim 1, wherein during the optimization process (146) used in the processing step (220) for each sought wavelength an average value of the intensity values generated over preceding processing cycles is subtracted from the corrected intensity values in order to generate adjusted intensity values.

3. Method (200) according to either of the preceding claims, wherein four parameters of each sigmoid function are adapted by means of curve fitting.

4. Method (200) according to any of the preceding claims, wherein each sigmoid function is mapped to an image channel assigned to the sought wavelength associated with the sigmoid function using a mapping matrix, wherein the mapping matrix includes a unit matrix and/or a colour compensation matrix.

5. Method (200) according to any of the preceding claims, wherein during the optimization process (146) used in the processing step (220) a deviation is ascertained between the corrected intensity values and/or the adjusted intensity values and the intensity values, represented by the luminescent signal (135), for all sought wavelengths and for all processing cycles, with the analysis data (145) being provided in dependence on the ascertained deviation.

6. Method (200) according to Claim 3, wherein the parameters of each sigmoid function are optimized during each iteration using an optimization algorithm (318).

7. Method (200) according to any of the preceding claims, wherein in the processing step (220) the analysis data (145) are provided if a difference between corresponding correction factors from different iterations falls below a threshold value and/or an amount of change of the difference falls below a threshold value.

8. Method (200) according to Claim 5 or Claim 7, wherein the deviation and/or the difference is or are weighted with an amplification factor.

9. Method (200) according to any of the preceding claims, wherein in the classification step (230) using the analysis data (145) a total amplitude and a Ct value of the luminescence signal (135) are determined, wherein the Ct value represents a number of processing cycles up to the point when at least one intensity value exceeds an intensity threshold value, wherein the intensity threshold value corresponds to a multiple of a standard deviation of the luminescence signal (135) ascertained from a signal-to-noise ratio.

10. Method (200) according to Claim 9, wherein using the total amplitude and the Ct value a decision process (450) is carried out to establish the class into which the luminescence signal (135) is classified, wherein the decision process (450) comprises a decision tree or a decision matrix.

11. Control device (140) configured to carry out and/or control the steps of the method (200) according to any of the preceding claims in appropriate units (142, 144, 148) .

12. Analyser (100) for analysing a sample (125) of biological material, wherein the analyser (100) has the following features:

a coupling section (110) for coupling the analyser (100) to a microfluidic apparatus (120) for processing the sample (125);
the control device (140) according to Claim 11; and
at least one optical readout unit (130) for providing the luminescence signal (135), wherein the control device (140) and the at least one optical readout unit (130) are connected to each other to allow the transmission of signals.

13. Computer program configured to carry out and/or control the steps of the method (200) according to any of the preceding claims.

14. Machine-readable storage medium on which the computer program according to Claim 13 is stored.


**Revendications**

1. Procédé (200) permettant d'évaluer un signal de luminescence (135) dans un analyseur (100) pour analyser un échantillon (125) de matière biologique, le procédé (200) présentant les étapes suivantes consistant à :

lire (210) le signal de luminescence (135) à partir d'une interface (141) avec au moins une unité de lecture optique (130) de l'analyseur (100), dans lequel le signal de luminescence (135) représente des valeurs d'intensité d'une luminescence de l'échantillon (125) disposé dans un dispositif microfluidique (120) avec au moins une longueur d'onde recherchée, dans lequel le dispositif microfluidique (120) est couplé à l'analyseur (100) pour traiter l'échantillon (125) dans plusieurs cycles de traitement ;
traiter (220) le signal de luminescence (135) en utilisant un processus d'optimisation (146) pour fournir des données d'analyse (145) qui sont optimisées en termes de distorsion de signal du signal de luminescence (135), dans lequel le processus d'optimisation (146) comprend une correction d'intensité (310) des valeurs d'intensité représentées par le signal de luminescence (135) pour tous les cycles de traitement et toutes les longueurs d'onde recherchées de la luminescence en utilisant respectivement un facteur de correction par cycle de traitement, valable pour toutes les longueurs d'onde et toutes les valeurs d'intensité afin de générer des valeurs d'intensité corrigées, dans lequel chaque facteur de correction prend en compte ou représente une distorsion de signal à corriger, dépendant du traitement de l'échantillon (125), du signal de luminescence (135) pour la valeur d'intensité respective, dans lequel le processus d'optimisation (146) comprend une détermination (306) effectuée en parallèle à la correction d'intensité (310) pour chaque fonction sigmoïde avec des valeurs d'intensité attendues pour chaque longueur d'onde recherchée, dans lequel le processus d'optimisation (146) est effectué par itérations, dans lequel chaque facteur de correction est optimisé à chaque itération en utilisant un algorithme d'optimisation (318), en particulier dans lequel l'algorithme d'optimisation (318) comprend une estimation selon la méthode des moindres carrés, dans lequel les facteurs de correction sont des valeurs idéales prédéfinies et/ou sont estimées en utilisant le signal de luminescence (135) au moyen d'une règle d'estimation, en particulier dans lequel la règle d'estimation comprend un établissement d'une part de chaque valeur d'intensité pour chaque cycle de traitement par rapport à une moyenne pour chaque longueur d'onde recherchée, une potentialisation de la part par un facteur de pondération, et une création d'une moyenne arithmétique pour toutes les longueurs d'onde recherchées ; et
classer (230) le signal de luminescence (135) dans l'une d'une pluralité de classes en utilisation les données d'analyse (145), chaque classe représentant un résultat d'analyse (454, 456) de l'échantillon (125).

2. Procédé (200) selon la revendication 1, dans lequel, dans le processus d'optimisation (146) utilisé à l'étape (220) de traitement, pour chaque longueur d'onde recherchée, une valeur moyenne des valeurs d'intensité, formée pour des cycles de traitement précédents, est soustraite des valeurs d'intensité corrigées afin de générer des valeurs d'intensité rectifiées.

3. Procédé (200) selon l'une quelconque des revendications précédentes, dans lequel quatre paramètres de chaque fonction sigmoïde sont adaptés au moyen d'une adaptation de courbe.

4. Procédé (200) selon l'une quelconque des revendications précédentes, dans lequel chaque fonction sigmoïde est mappée en utilisant une matrice de mappage sur un canal d'image associé à la longueur d'onde recherchée, appartenant à la fonction sigmoïde, dans lequel la matrice de mappage présente une matrice unité et/ou une matrice de compensation de couleur.

5. Procédé (200) selon l'une quelconque des revendications précédentes, dans lequel, dans le processus d'optimisation (146) utilisé à l'étape (220) de traitement, un écart entre les valeurs d'intensité corrigées et/ou les valeurs d'intensité rectifiées et les valeurs d'intensité représentées par le signal de luminescence (135) est établi pour toutes les longueurs d'onde recherchées et pour tous les cycles de traitement, dans lequel les données d'analyse (145) sont fournies en fonction de l'écart établi.

6. Procédé (200) selon la revendication 3, dans lequel les paramètres de chaque fonction sigmoïde sont optimisés à chaque itération en utilisant un algorithme d'optimisation (318).

7. Procédé (200) selon l'une quelconque des revendications précédentes, dans lequel à l'étape (220) de préparation, les données d'analyse (145) sont fournies lorsqu'une différence entre des facteurs de correction correspondants issus de différentes itérations est inférieure à une valeur limite et/ou une quantité de variation de la différence est inférieure à une valeur seuil.

8. Procédé (200) selon la revendication 5 ou la revendication 7, dans lequel l'écart et/ou la différence est/sont pondéré(s) par un facteur d'amplification.

9. Procédé (200) selon l'une quelconque des revendications précédentes, dans lequel à l'étape (230) de classement en utilisant les données d'analyse (145), une amplitude totale et une valeur de et du signal de luminescence (135) sont déterminées, dans lequel la valeur de et représente un nombre de cycles de traitement jusqu'à ce qu'au moins une valeur d'intensité dépasse une valeur seuil d'intensité, dans lequel la valeur seuil d'intensité correspond à un multiple d'un écart-type du signal de luminescence (135) établi à partir d'un rapport signal/bruit.

10. Procédé (200) selon la revendication 9, dans lequel, en utilisant l'amplitude totale et la valeur de et, un processus de décision (450) est effectué concernant la classe dans laquelle est classé le signal de luminescence (135), le processus de décision (450) comprenant une arborescence de décision ou une matrice de décision.

11. Appareil de commande (140) agencé pour exécuter et/ou piloter les étapes du procédé (200) selon l'une des revendications précédentes dans des unités correspondantes (142, 144, 148).

12. Analyseur (100) permettant d'analyser un échantillon (125) de matière biologique, l'analyseur (100) présentant les particularités suivantes :

   une partie de couplage (110) pour coupler l'analyseur (100) à un dispositif microfluidique (120) pour traiter l'échantillon (125) ;
   l'appareil de commande (140) selon la revendication 11 ; et
   au moins une unité de lecture optique (130) pour fournir le signal de luminescence (135), dans lequel l'appareil de commande (140) et ladite au moins une unité de lecture optique (130) sont reliés ensemble en transmission de signal.

13. Programme informatique conçu pour exécuter et/ou piloter les étapes du procédé (200) selon l'une quelconque des revendications précédentes.

14. Support de stockage lisible par machine, sur lequel est enregistré le programme informatique selon la revendication 13.

EP 4 168 772 B1

# Fig. 1

100 140      141   135

142

135

146

144

145

148

130

120

125

110

160

150

# Fig. 2

200

210

220

230

15

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3454043 A1
- US 20080018898 A1
- EP 1770172 A2